Europäisches Patentamt

European Patent Office

Office européen des brevets

(11) Veröffentlichungsnummer: **0 262 311**
**A1**

## (12) EUROPÄISCHE PATENTANMELDUNG

(21) Anmeldenummer: 87109665.7

(22) Anmeldetag: 04.07.87

(51) Int. Cl.⁴: **B01J 23/86** , B01J 37/00 , B01D 53/36

(30) Priorität: 02.10.86 DE 3633515

(43) Veröffentlichungstag der Anmeldung:
06.04.88 Patentblatt 88/14

(84) Benannte Vertragsstaaten:
AT BE CH DE ES FR GB IT LI LU NL SE

(71) Anmelder: DIDIER-WERKE AG
Lessingstrasse 16-18
D-6200 Wiesbaden(DE)

Anmelder: Didier Engineering GmbH
Alfredstrasse 28 Postfach 10 09 45
D-4300 Essen 1(DE)

(72) Erfinder: Kainer, Hartmut, Dr.
Sauerbruchstrasse 1a
D-6200 Wiesbaden 12(DE)
Erfinder: Grimm, Daniel
Haupstrasse 10
D-6229 Schlangenbad-Bärstadt(DE)
Erfinder: Flockenhaus, Claus, Prof. Dr.
Tersteegenweg 16
D-4300 Essen 1(DE)
Erfinder: Laue, Karl-Heinrich
Bergische Strasse 41
D-4320 Hattingen 16(DE)

(74) Vertreter: Brückner, Raimund, Dipl.-Ing.
c/o Didier-Werke AG Lessingstrasse 16-18
D-6200 Wiesbaden(DE)

(54) **Katalysator in Form einer Platte für die Stickoxidreduzierung in Abgasen.**

(57) Die Erfindung betrifft einen Katalysator in Form einer Platte für Stickoxidreduzierung in Abgasen, hergestellt durch Pressen von körnigem $Cr_2O_3$ oder einem Gemisch aus körnigem $Fe_2O_3$ mit $Cr_2O_3$ mit Phosphorsäure bzw. Schwefelsäure als Bindemittel, dadurch gekennzeichnet, daß ein Gemenge aus getrennt hergestellten Mischungen von $Cr_2O_3$ bzw. $(Fe_2O_3 + Cr_2O_3)$ und Phosphorsäure als Bindemittel und von $Cr_2O_3$ bzw. $(Fe_2O_3 + Cr_2O_3)$ und Schwefelsäure als Bindemittel gepreßt wird.

## Katalysator in Form einer Platte für die Stickoxidreduzierung in Abgasen

Die Erfindung bezieht sich auf einen Katalysator in Form einer Platte für die Stickoxidreduzierung in Abgasen, hergestellt durch Pressen von körnigem $Cr_2O_3$ oder einem Gemisch aus körnigem $Fe_2O_3$ mit $Cr_2O_3$ mit Phosphorsäure bzw. Schwefelsäure als Bindemittel.

In der DE-OS 35 05 648 werden $Fe_2O_3$-Katalysatormaterialplatten beschrieben, die unter Verwendung von Schwefelsäure oder Phosphorsäure als Bindemittel hergestellt werden. Dabei hat sich gezeigt, daß nur die Schwefelsäurebindung zu einer hohen Aktivität, dafür aber zu großer Wasserempfindlichkeit führt, wodurch die Platten durch Wasseraufnahme weich werden. Umgekehrt mindert die Phosphorsäurebindung die Aktivität, führt aber andererseits zu harten und nicht wasserempfindlichen Platten. Mischungen von Phosphorsäure und Schwefelsäure führen zu einer nicht immer befriedigenden Katalysatorwirkung. Auch die Tränkung von mit Phosphorsäure gebundenen Katalysatorplatten mit Schwefelsäure und umgekehrt führt nur zu mäßigen Ergebnissen.

Aufgabe der vorliegenden Erfindung ist es daher, einen Katalysator der eingangs genannten Art zu schaffen, welcher einerseits eine möglichst hohe Aktivität mit guter Festigkeit und andererseits eine geringe Wasserempfindlichkeit aufweist.

Die erfindungsgemäße Lösung dieser Aufgabe besteht darin, daß ein Gemenge aus getrennt hergestellten Mischungen von $Cr_2O_3$ bzw. ($Fe_2O_3$ + $Cr_2O_3$) und Phosphorsäure als Bindemittel und von $Cr_2O_3$ bzw. ($Fe_2O_3$ + $Cr_2O_3$) und Schwefelsäure als Bindemittel gepreßt wird.

Die Katalysatorplatten haben den Vorteil eines homogenen Katalysatorgemenges und zeigen einen hinreichenden Abrieb, der bei Katalysatorplatten erwünscht ist.

Ferner hat sich gezeigt, daß der Katalysator hoher Festigkeit und Aktivität unter Verwendung des gleichen Lösungsprinzips dadurch hergestellt werden kann, daß er als aus Schichten bestehender Preßkörper ausgebildet ist, wobei die Schichten abwechselnd aus einer Mischung von $Cr_2O_3$ bzw. ($Fe_2O_3$ + $Cr_2O_3$) und Phosphorsäure als Bindemittel und aus einer davon getrennt hergestellten Mischung von $Cr_2O_3$ bzw. ($Fe_2O_3$ + $Cr_2O_3$) und Schwefelsäure als Bindmittel bestehen und jeweils die Außenschicht aus einer Mischung von $Cr_2O_3$ bzw. ($Fe_2O_3$ + $Cr_2O_3$) und Schwefelsäure als Bindemittel besteht. Wegen dieser schwefelsäuregebundenen Außenschichten und der dadurch bedingten Weichheit läßt sich ein Abrieb beim Betrieb bewußt herbeiführen.

In die Außenschicht können Stoffe wie z.B. $V_2O_5$, $WO_3$, $Nb_2O_5$, $MnO$ etc., in die Schichten, insbesondere in die Außenschicht eingemischt werden. Durch diese Maßnahme muß nur etwa die Hälfte der Katalysatormasse dotiert werden.

## Ansprüche

1. Katalysator in Form einer Platte für die Stickoxidreduzierung in Abgasen, hergestellt durch Pressen von körnigem $Cr_2O_3$ oder einem Gemisch aus körnigem $Fe_2O_3$ mit $Cr_2O_3$ mit Phosphorsäure bzw. Schwefelsäure als Bindemittel, dadurch gekennzeichnet, daß ein Gemenge aus getrennt hergestellten Mischungen von $Cr_2O_3$ bzw. ($Fe_2O_3$ + $Cr_2O_3$) und Phosphorsäure als Bindemittel und von $Cr_2O_3$ bzw. ($Fe_2O_3$ + $Cr_2O_3$) und Schwefelsäure als Bindemittel gepreßt wird.

2. Katalysator nach Anspruch 1, dadurch gekennzeichnet, daß er als aus Schichten bestehender Preßkörper ausgebildet ist, wobei die Schichten abwechselnd aus einer Mischung von $Cr_2O_3$ bzw. ($Fe_2O_3$ + $Cr_2O_3$) und Phosphorsäure als Bindemittel und aus einer davon getrennt hergestellten Mischung von $Cr_2O_3$ bzw. ($Fe_2O_3$ + $Cr_2O_3$) und Schwefelsäure als Bindemittel bestehen und jeweils die Außenschicht aus einer Mischung von $Cr_2O_3$ bzw. ($Fe_2O_3$ + $Cr_2O_3$) und Schwefelsäure als Bindemittel besteht.

3. Katalysator nach mindestens einem der Ansprüche 1 oder 2, dadurch gekennzeichnet, daß in den Schichten Dotierungen in Form von $V_2O_5$, $WO_3$, $NbO_5$ und $MnO$ vorgesehen sind.

4. Katalysator nach mindestens einem der Ansprüche 1 bis 3, dadurch gekennzeichnet, daß zusätzlich dotierende oder inhibierende Stoffe eingearbeitet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 505 648 (DIDIER ENGINEERING GMBH) <br> * vollständiges Dokument * <br><br> ----- | 1,3,4 | B 01 J 23/86 <br> B 01 J 37/00 <br> B 01 D 53/36 |
| | | | **RECHERCHIERTE SACHGEBIETE (Int. Cl.4)** |
| | | | B 01 D 53/00 <br> B 01 J 23/00 <br> B 01 J 37/00 |

Der vorliegende Recherchenbericht wurde für alle Patentansprüche erstellt.

| Recherchenort | Abschlußdatum der Recherche | Prüfer |
|---|---|---|
| BERLIN | 22-10-1987 | BERTRAM H E H |